# EUROPÄISCHE PATENTSCHRIFT

(11) **EP 1 102 972 B1**
(45) Veröffentlichungstag und Bekanntmachung des Hinweises auf die Patenterteilung: **13.10.2004**
(21) Anmeldenummer: 99941451.9
(22) Anmeldetag: 21.07.1999
(51) Int. Cl.: G01M 3/28, B64F 1/28

(54) **ÜBERWACHUNGSSYSTEM FÜR EIN PIPELINESYSTEM**
MONITORING SYSTEM FOR A PIPELINE SYSTEM
SYSTEME DE SURVEILLANCE POUR UN SYSTEME DE CONDUITES

(30) Priorität: 06.08.1998 DE 19835621
(43) Veröffentlichungstag der Anmeldung: 30.05.2001
(73) Patentinhaber: Flughafen München GmbH, 85356 München-Flughafen (DE)
(72) Erfinder: HÜBNER, Wolfgang, D-85467 Oberneuching (DE)
(74) Vertreter: Körfer, Thomas, Dipl.-Phys.
(86) Internationale Anmeldenummer: PCT/EP1999/005219
(87) Internationale Veröffentlichungsnummer: WO 2000/008435

(56) Entgegenhaltungen:
- DE-A- 3 833 127
- DE-A- 19 501 044
- US-A- 4 727 748
- US-A- 5 297 423

## Beschreibung

Die vorliegende Erfindung betrifft ein Überwachungssystem für ein Pipelinesystem, das beispielsweise auf Flughäfen zur Betankung von Flugzeugen vorgesehen ist. Die vorliegende Erfindung betrifft weiterhin ein Überwachungsverfahren für ein derartiges Pipelinesystem. Das erfindungsgemäße Überwachungssystem und das erfindungsgemäße Überwachungsverfahren dienen insbesondere zum Feststellen von Lecks im Pipelinesystem, um das Austreten von Fluid, wie z. B. Kerosin, in die Umgebung so schnell wie möglich erkennen und stoppen zu können.

Pipelinesysteme, wie sie beispielsweise auf Flughäfen zur Versorgung von Flugzeugen mit Kerosin vorgesehen sind, weisen einen Einspeisepunkt und mehrere Austrittspunkte auf. Das im Pipelinesystem geführte Fluid, z. B. Kerosin, wird an dem Einspeisepunkt in das Pipelinesystem eingespeist und kann an den mehreren Austrittspunkten je nach Bedarf abgenommen werden. In der Regel steht das Pipelinesystem dabei unter Druck, so daß beim Auftreten von Lecks innerhalb kurzer Zeit große Mengen an Fluid in die Umgebung fließen können.

Eine Möglichkeit, auftretende Lecks im Pipelinesystem festzustellen, ist beispielsweise eine reine Messung des Durchflusses des Fluids an dem Einspeisepunkt und den Austrittspunkten. Die am Einspeisepunkt in das System fließende Fluidmenge und die an den Austrittspunkten dem Pipelinesystem abgegebene Fluidmenge können dabei hinsichtlich der momentanen Durchflußmenge verglichen werden. Eine derartige Lecküberwachung über eine reine Durchflußmessung scheitert aber bereits an der nicht ausreichenden Kontinuität der Meßwertmeldungen und der Tatsache, daß der Durchfluß nur ein relative Größe zu einem bestimmten Zeitpunkt, nicht aber eine absolute Größe über längere Abgabezeiträume darstellt. Weiterhin ist eine Durchflußmessung neben der Fehlertoleranz der Impulsmessung in dem Durchflußmesser außerdem mit dem Fehler der Zeitmessung und einer geringen absoluten Auflösung behaftet.

Die Aufgabe der vorliegenden Erfindung ist somit, ein Überwachungssystem bzw. ein Überwachungsverfahren für ein Pipelinesystem mit einem Einspeisepunkt und mehreren Abgabepunkten bereitzustellen, die mit einfachen Mitteln eine rasche und zuverlässige Leckerkennung im Pipelinesystem ermöglichen.

Diese Aufgabe wird durch ein Überwachungssystem gemäß dem beigefügten Anspruch 1 und ein Überwachungsverfahren gemäß dem beigefügten Anspruch 6 gelöst. Vorteilhafte Ausgestaltungen sind in den jeweiligen Unteransprüchen angegeben.

Das Überwachungssystem für ein Pipelinesystem mit einem Einspeisepunkt und mehreren Abgabepunkten gemäß der vorliegenden Erfindung umfaßt eine an dem Einspeisepunkt angeordnete erste Meßeinrichtung zum Erfassen einer in das Pipelinesystem eingespeisten Fluidmenge und zum Erzeugen einer entsprechenden ersten Meßgröße. Weiterhin sind Entnahmeeinrichtungen zum Entnehmen von Fluid aus dem Pipelinesystem an den Abgabepunkten vorgesehen, wobei an jeder Entnahmeeinrichtung eine zweite Meßeinrichtung zum Erfassen einer aus dem Pipelinesystem entnommenen Fluidmenge und zum Erzeugen einer entsprechenden zweiten Meßgröße angeordnet ist. Die erste und die zweite Meßgröße werden einer Rechnereinrichtung übertragen, die einen Differenzwert zwischen der ersten Meßgröße und den aufsummierten zweiten Meßgrößen bildet, mehrere Differenzwerte über einen bestimmten Zeitraum aufsummiert und den resultierenden Summen-Differenzwert mit einem vorbestimmten Grenzwert vergleicht.

Entsprechend umfaßt das Überwachungsverfahren für ein Pipelinesystem mit einem Einspeisepunkt und mehreren Abgabepunkten gemäß der vorliegenden Erfindung die Schritte des Erfassens einer in das Pipelinesystem eingespeisten Fluidmenge an dem Einspeisepunkt und Erzeugen einer entsprechenden ersten Meßgröße, das Entnehmen von Fluid aus dem Pipelinesystem an den Abgabepunkten, wobei an jedem Abgabepunkt eine aus dem Pipelinesystem entnommene Fluidmenge erfaßt und eine entsprechende zweite Meßgröße erzeugt wird, und des Übertragens der ersten Meßgröße und der zweiten Meßgröße an eine Rechnereinrichtung, in der ein Differenzwert zwischen der ersten Meßgröße und den aufsummierten zweiten Meßgrößen gebildet wird, mehrere Differenzwerte über einen bestimmten Zeitraum aufsummiert und der resultierende Summen-Differenzwert mit einem vorbestimmten Grenzwert verglichen werden.

Das Ziel der vorliegenden Erfindung ist dabei, möglichst kontinuierlich die eingespeiste Fluidmenge mit der austretenden Fluidmenge in Vergleich zu bringen. Dabei kommt es durch das völlig asynchrone Verhalten der ersten Meßeinrichtung und der zweiten Meßeinrichtungen pro Erfassungsereignis immer zu einer Differenzmenge. Die Aufsummierung der gemessenen Differenzwerte über einen definierten Zeitraum und der Vergleich mit einem vorbestimmten Grenzwert ermöglicht dabei auf einfache Weise eine zuverlässige und rasche Feststellung von Lecks im Pipelinesystem.

Vorteilhafterweise sind die Entnahmeeinrichtungen mobil und mit den Abgabepunkten verbindbar, wobei an jeder Entnahmeeinrichtung eine Übertragungseinrichtung zum Übertragen der zweiten Meßgröße an die Rechnereinrichtung vorgesehen ist. Beispielsweise bei im Flughafen vorgesehenen Pipelinesystemen erfolgt das Betanken der Flugzeuge über mobile Betankungswagen, die jeweils nach Bedarf mit den Abgabepunkten verbunden werden können, um Kerosin aus dem Pipelinesystem zu entnehmen und das jeweilige Flugzeug zu betanken. An jedem Betankungswagen ist gemäß der vorliegenden Erfindung eine Übertragungseinrichtung zum Übertragen der zweiten Meßgröße an die Rechnereinrichtung des Überwachungssystems vorgesehen.

Vorteilhafterweise erfassen die erste Meßeinrichtung und die zweiten Meßeinrichtungen die jeweilige Fluidmenge als Volumen pro Zeiteinheit. Die erste Meßgröße und die zweiten Meßgrößen sind somit Größen, die die Einheit Volumen pro Zeiteinheit haben. Der vorbestimmte Grenzwert wird dabei ebenfalls als Volumen pro Zeiteinheit festgelegt.

Wenn die Rechnereinrichtung, für den Fall, daß der Summen-Differenzwert den Grenzwert überschreitet, ein entsprechendes Warnsignal erzeugt und an die Entnahmeeinrichtungen überträgt. Die Entnahmeeinrichtungen, die bei Empfang des Warnsignales Fluid aus dem Pipelinesystem entnehmen, unterbrechen dabei die Entnahme automatisch. Auf diese Weise wird einfach und rasch der Entnahmevorgang von Fluid aus dem Pipelinesystem unterbrochen, so daß eine nochmalige Überprüfung, ob tatsächlich ein Leck vorliegt, und im Bestätigungsfall eine Lokalisierung des Lecks ermöglicht wird.

Wenn die Rechnereinrichtung beim Bestätigungsvorgang ein weiteres Anwachsen des Summen-Differenzwertes und ein Überschreiten eines zweiten höheren Grenzwertes feststellt, so veranlaßt sie ein Sperren des Pipelinesystemes und ein Umschalten auf ein paralleles Pipelinesystem. Im gesperrten Pipelinesystem kann daraufhin das Leck lokalisiert und repariert werden.

Vorteilhafterweise eliminiert die Rechnereinrichtung beim Bilden des Summen-Differenzwertes permanent auftretende Differenzwerte, die durch zeitliche Verzögerungen im Pipelinesystem und/oder durch Systemtoleranzen bedingt sind. Mit anderen Worten werden in der Rechnereinrichtung durch zeitlichen Schlupf und durch Toleranz der Meßeinrichtungen permanent auftretende Differenzmengen eliminiert.

Weiterhin ist es von Vorteil, zumindest einen Temperatursensor vorzusehen, der zur Temperaturkompensation des von der Rechnereinheit ermittelten Summen-Differenzwertes dient.

Die vorliegende Erfindung wird im folgenden anhand eines bevorzugten Ausführungsbeispieles unter Bezug auf die beigefügten Zeichnungen näher erläutert, in denen
- Fig. 1: schematisch eine Übersicht eines Pipelinesystems zeigt, bei dem die vorliegenden Erfindung eingesetzt wird, und
- Fig. 2: ein Blockschaltbild eines erfindungsgemäßen Überwachungssystems darstellt.

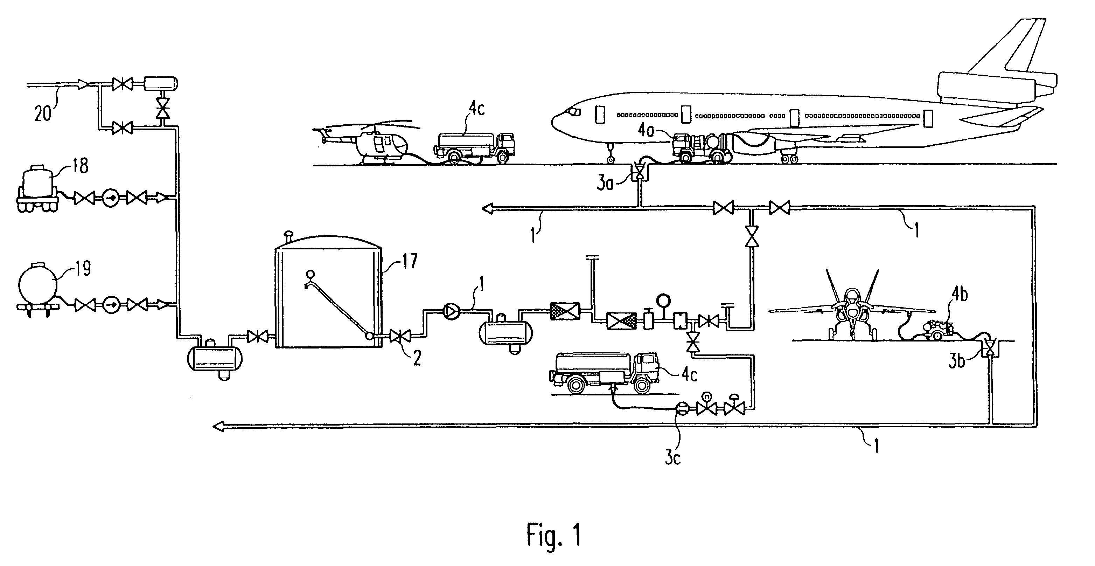

In Figur 1 ist schematisch ein Pipelinesystem 1 dargestellt, bei dem die vorliegende Erfindung verwendet werden kann. Das dargestellte Pipelinesystem 1 ist beispielsweise in einen Flughafen integriert und dient zur Versorgung von Flugzeugen etc. mit Kerosin. Im folgenden werden nur die für die vorliegende Erfindung relevanten Bestandteile des dargestellten Pipelinesystems 1 erläutert.

Das Pipelinesystem 1 stellt die Verbindung zwischen einem Tank 17 für Kerosin mit auf den Vorfeldern für die Flugzeuge angeordneten Abgabepunkten 3 her. Das Pipelinesystem 1 ist dabei in Hinblick auf eine möglichst hohe Verfügbarkeit und in Hinblick auf eine Vermeidung von Druckstößen im System als Ring verlegt. Das Pipelinesystem hat üblicherweise eine Länge von mehreren Kilometern und das in dem Pipelinesystem geführte Kerosin steht üblicherweise unter einem Betriebsdruck von mehreren Bar.

Der Tank 17 für das Kerosin wird beispielsweise über eine externe Pipeline 20, Tanklastzüge 18 oder mit Tanks versehenen Zuganhängern 19 über entsprechende Anschlüsse befüllt. Über einen Einspeisepunkt 2 wird das Pipelinesystem 1 aus dem Tank 17 mit Kerosin versorgt. An mehreren Ausgabepunkten 3, z. B. einem Ausgabepunkt 3a, einem Ausgabepunkt 3b und einem Ausgabepunkt 3c kann Kerosin aus dem Pipelinesystem 1 mittels entsprechender Entnahmeeinrichtungen 4 entnommen werden. Da nicht an jedem Ausgabepunkt 3 zu jedem Zeitpunkt Kerosin entnommen wird, sind die Entnahmeeinrichtungen 4 üblicherweise mobil und bei Bedarf an entsprechende Ausgabepunkte 3 anschließbar. Die dargestellte Entnahmeeinrichtung 4a ist beispielsweise ein Betankungswagen, der mit dem Ausgabepunkt 3a verbunden dargestellt ist und ein Flugzeug betankt. Am Ausgabepunkt 3b ist ein Betankungsanhänger 4b angeschlossen, der einen Düsenjäger betankt. Am Betankungspunkt 3c ist ein Tankwagen 4c angeschlossen, der beispielsweise zur Betankung von Hubschraubern verwendet wird. Nach Vollendung des jeweiligen Betankungsvorganges werden die Entnahmeeinrichtungen 4 wieder von dem Ausgabepunkt gelöst und an einem anderen Ausgabepunkt eingesetzt. Das dargestellte Pipelinesystem 1 umfaßt zusätzlich zu den erläuterten für die Erfindung relevanten Komponenten u. a. eine Kesselwagenpumpstation, eine Tankwagenentladestation, eine Pipelineübergabestation und eine Hydrantenpumpstation.

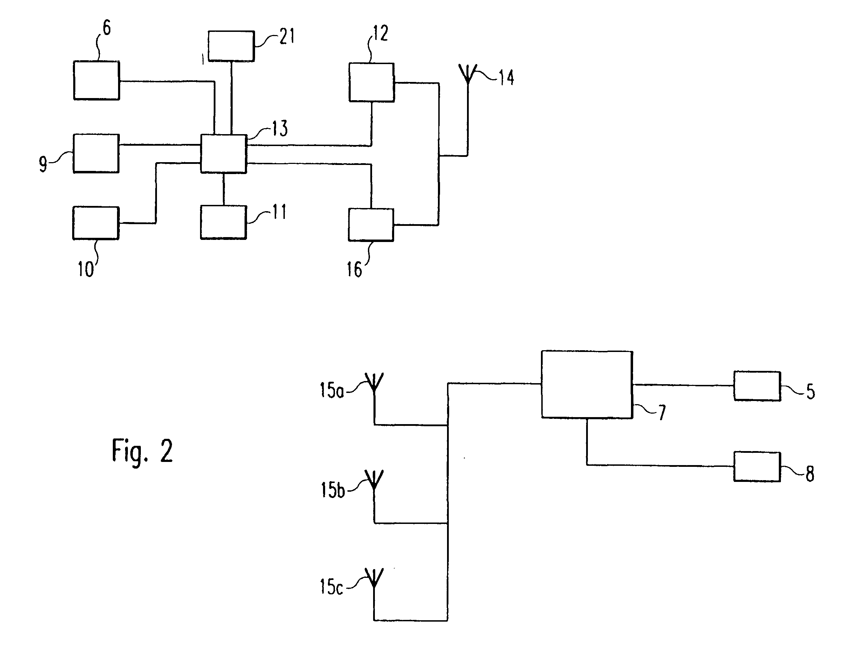

In Figur 2 ist ein Blockschaltbild eines Ausführungsbeispieles eines erfindungsgemäßen Überwachungssystems für das in Figur 1 dargestellte Pipelinesystem 1 gezeigt. Das Überwachungssystem umfaßt eine an dem Einspeisepunkt 1 angeordnete erste Meßeinrichtung 5. Die Meßeinrichtung 5 erfaßt die aus dem Tank 17 in das Pipelinesystem 1 eingespeiste Kerosinmenge als Volumenmenge, d. h. als eingespeistes Volumen pro Zeiteinheit. Die erste Meßeinrichtung 5 erzeugt dabei die erfaßte Kerosinmenge als erste Meßgröße. An den Entnahmeeinrichtungen 4, d. h. z. B. am Betankungswagen 4a, am Betankungsanhänger 4b und am Tankwagen 4c ist jeweils eine zweite Meßeinrichtung 6 angeordnet, die die jeweils über den entsprechenden Abgabepunkt 3 aus dem Pipelinesystem 1 entnommene Kerosinmenge erfaßt und eine entsprechende zweite Meßgröße erzeugt. Auch hier wird die entnommene Kerosinmenge in Einheiten des entnommenen Volumens pro Zeiteinheit gemessen. Die erste Meßeinrichtung 5 und die zweiten Meßeinrichtungen 6 sind beispielsweise Durchflußmesser. Die an dem Einspeisepunkt 1 angeordnete erste Meßeinrichtung 5 führt die erste Meßgröße einer angeschlossenen Rechnereinheit 7 zu. Die zweiten Meßeinrichtungen 6 sind über eine Verarbeitungsvorrichtung 13 mit einer Übertragungseinrichtung 12 verbunden, die über eine Antenne 14 die zweite Meßgröße über eine Funkstrecke der Rechnereinheit 7 übermittelt. Die Rechnereinheit 7 ist mit mehreren Antennen 15a, 15b, 15c verbunden, die dergestalt auf dem Flughafen verteilt sind, daß an jeder möglichen Position einer Entnahmeeinrichtung 4 Signale gesendet und empfangen werden können.

Die Funkübertragung zwischen den Entnahmeeinrichtungen 4 und der Rechnereinrichtung 7 kann beispielsweise durch ein LAN-Netz realisiert sein. Weiterhin sind die Antennen 15 vorzugsweise mit Lichtwellenleitern mit der Rechnereinrichtung 7 verbunden, um eine rasche und zuverlässige Übertragung auch hoher Datenmengen zu gewährleisten.

Die an den Entnahmeeinrichtungen 4 angeordneten Verarbeitungseinheiten 13 wandeln die zweite Meßgröße von den zweiten Meßeinrichtungen 6 in entsprechend per Funk übertragbare Signale um. Weiterhin ist an jeder Entnahmeeinrichtung 4 eine mit der Antenne 14 verbundene Empfangseinrichtung 16 zum Empfangen von Signalen von der Rechnereinheit 7 vorgesehen. Die Empfangseinrichtung 16 ist ebenfalls mit der Verarbeitungseinrichtung 13 verbunden, die die von der Rechnereinheit 7 empfangenen Signale abhängig von der Art der empfangenen Signale einer Vorrichtung zur Betankungssteuerung 9, einer Vorrichtung zur Ausgabe akustischer bzw. optischer Signale 10 bzw. einer Anzeigevorrichtung 11 ausgibt. Die zweite Meßeinrichtung 6 ist ebenfalls mit der Anzeigeinrichtung 11 verbunden, so daß die entnommene Kerosinmenge an der Entnahmeeinrichtung 4 abgelesen werden kann.

Die an der Rechnereinrichtung 7 ankommenden zweiten Meßgrößen werden aufsummiert, woraufhin ein Differenzwert zwischen der ersten Meßgröße und den aufsummierten zweiten Meßgrößen gebildet wird. Vorzugsweise wird dabei die Summe der zweiten Meßgrößen von der ersten Meßgröße abgezogen. Die erste Meßgröße und die zweiten Meßgrößen sind dabei keine gemittelten Meßgrößen, sondern instantan gemessene Durchflußmengen, die in einem bestimmten Takt, d. h. in bestimmten Zeitabständen gemessen werden. In der Rechnereinrichtung 7 werden mehrere Differenzwerte über einen bestimmten Zeitraum aufsummiert, woraufhin der resultierende Summen-Differenzwert mit einem vorbestimmten Grenzwert verglichen wird. Beispielsweise beträgt der vorbestimmte Grenzwert einige Tausend Liter pro Minute. Überschreitet der Summen-Differenzwert den vorbestimmten Grenzwert, so besteht eine hohe Wahrscheinlichkeit dafür, daß in dem Pipelinesystem 1 ein großes Leck aufgetreten ist. Die Rechnereinheit 7 erzeugt, wenn der Summen-Differenzwert den Grenzwert überschreitet, ein entsprechendes Warnsignal und überträgt es über die Antennen 15 per Funk an die Entnahmeeinrichtungen 4. Dort werden die Warnsignale über die Antenne 14 und die Empfangseinrichtung 16 empfangen und mittels der Verarbeitungseinrichtung 13 an die Vorrichtung 9 zur Betankungssteuerung, die Vorrichtung 10 zur Ausgabe eines akustischen oder optischen Signales und die Anzeigevorrichtung 11 ausgegeben. Die Vorrichtung 10 erzeugt ein akustisches oder optisches Warnsignal, so daß der jeweilige Bediener an der Entnahmeeinrichtung informiert wird, daß das Pipelinesystem automatisch unterbrochen wird. Die Vorrichtung 9 zur Betankungssteuerung unterbricht den Entnahmevorgang bei Empfang des Warnsignales sofort, so daß aus - dem gesamten Pipelinesystem 1 kein Kerosin mehr entnommen wird.

Daraufhin wird ein Druck-Überwachungsverfahren von ca. 1 Minute Dauer durchgeführt, bei dem im wesentlichen der Druckverlauf in definierten, bestimmten Rohrabschnitten des Pipelinesystems 1 kontrolliert wird. Bei Differenzen zwischen den Druckhöhen lassen sich Rückschlüsse auf mögliche Lecks ziehen. Bei einem weiteren Anwachsen des Summen-Differenzwertes, d. h. wenn eine den Grenzwert überschreitende Kerosinmenge am Einspeisepunkt 2 in das Pipelinesystem 1 gegeben wird und ein zweiter vorbestimmter Grenzwert, der höher als der erste Grenzwert ist, überschritten wird, veranlaßt die Rechnereinrichtung 7 ein Sperren des Pipelinesystems 1 und ein Umschalten auf ein paralleles zweites Pipelinesystem. Das zweite parallele Pipelinesystem ist parallel zum ersten Pipelinesystem 1 angeordnet und dient zur Sicherstellung der Kerosinversorgung bei Ausfall des ersten Pipelinesystems 1.

In der Rechnereinrichtung 7 werden bei Bilden des Summen-Differenzwertes permanent auftretende Differenzwerte eliminiert, die beispielsweise durch den zeitlichen Schlupf und die Toleranz der ersten und zweiten Meßeinrichtungen 5 und 6 auftreten. Weiterhin sind in der Nähe des ersten Einspeisepunktes 1 und in der Nähe der Meßeinrichtung 6 jeweils Temperatursensoren 8, 21 vorgesehen, der mit der Rechnereinheit 7 verbunden ist und zur Temperaturkompensation des Summen-Differenzwertes dient.

## Patentansprüche

1. Überwachungssystem an einem Pipelinesystem (1) mit einem Einspeisepunkt (2) und einem oder mehreren Abgabepunkten (3), mit
einer an dem Einspeisepunkt (1) angeordneten ersten Meßeinrichtung (5), die eine in das Pipelinesystem (1)
eingespeiste Fluidmenge oder Fluidmenge pro Zeiteinheit erfaßt und eine entsprechende erste Meßgröße erzeugt, Entnahmeeinrichtungen (4) die Fluid aus dem Pipelinesystem entfernen, wobei an jeder Entnahmeeinrichtung (4) eine zweite Meßeinrichtung (6) angeordnet ist, die eine aus dem Pipelinesystem (1) entnommene Fluidmenge oder Fluidmenge pro Zeiteinheit erfassen und eine entsprechende zweite Meßgröße erzeugen, und
einer Rechnereinrichtung (7), der die erste Meßgröße und die zweiten Meßgrößen übertragen werden, die einen Differenzwert zwischen der ersten Meßgröße und den aufsummierten zweiten Meßgrößen bildet, mehrere Differenzwerte über einen bestimmten Zeitraum aufsummiert und den resultierenden Summen-Differenzwert mit einem vorbestimmten ersten Grenzwert vergleicht,
**dadurch gekennzeichnet,**
**daß** die Rechnereinrichtung (7), wenn der Summen-Differenzwert den ersten Grenzwert überschreitet, ein entsprechendes Warnsignal erzeugt und an die Entnahmeeinrichtungen (4) überträgt,
**daß** die Fluid aus dem Pipelinesystem (1) entnehmenden Entnahmeeinrichtungen (4) bei Empfang des Warnsignales die Entnahme automatisch unterbrechen, und
**daß** die Rechnereinrichtung (7) bei Feststellen eines weiteren Anwachsens des Summen-Differenzwertes und Überschreiten eines zweiten Grenzwertes ein Sperren des Pipelinesystems (1) veranlaßt.

2. Überwachungssystem an einem Pipelinesystem gemäß Anspruch 1,
**dadurch gekennzeichnet,**
**daß** die Entnahmeeinrichtungen (4) mobil und mit den Abgabepunkten (3) verbindbar sind, wobei an jeder Entnahmeeinrichtung (4) eine Übertragungseinrichtung (12) zum Übertragen der zweiten Meßgröße per Funk an die Rechnereinrichtung (7) vorgesehen ist.

3. Überwachungssystem an einem Pipelinesystem gemäß Anspruch 1,
**dadurch gekennzeichnet,**
**daß** die Rechnereinrichtung (7) bei Feststellen eines weiteren Anwachsens des Summen-Differenzwertes und Überschreiten eines zweiten höheren Grenzwertes ein Sperren des Pipelinesystems (1) und Umschalten auf ein paralleles Pipelinesystem veranlaßt.

4. Überwachungssystem an einem Pipelinesystem gemäß einem der vorhergehenden Ansprüche,
**dadurch gekennzeichnet,**
**daß** die Rechnereinrichtung (7) beim Bilden des Summen-Differenzwertes durch zeitliche Verzögerungen im Pipelinesystem (1) und/oder durch Systemtoleranzen bedingte permanent auftretende Differenzwerte eliminiert.

5. Überwachungssystem an einem Pipelinesystem gemäß einem der vorhergehenden Ansprüche,
**gekennzeichnet durch**
zumindest einen Temperatursensor (8) zur Temperaturkompensation des von der Rechnereinheit (7) ermittelten Summen-Differenzwertes.

6. Überwachungsverfahren an einem Pipelinesystem mit einem Einspeisepunkt (2) und einem oder mehreren Abgabepunkten (3), mit folgenden Schritten:
Erfassen einer in das Pipelinesystem (1) eingespeisten Fluidmenge oder Fluidmenge pro Zeiteinheit an dem Einspeisepunkt und Erzeugen einer entsprechenden ersten Meßgröße,
Entnehmen von Fluid aus dem Pipelinesystem an den Abgabepunkten (3), wobei an jedem Abgabepunkt (3) eine aus dem Pipelinesystem (1) entnommene Fluidmenge oder Fluidmenge pro Zeiteinheit erfaßt und eine entsprechende zweite Meßgröße erzeugt wird, und
Übertragen der ersten Meßgröße und der zweiten Meßgrößen an eine Rechnereinrichtung (7), in der ein Differenzwert zwischen der ersten Meßgröße und den aufsummierten zweiten Meßgrößen gebildet wird, mehrere Differenzwerte über einen bestimmten Zeitraum aufsummiert und der resultierende Summen-Differenzwert mit einem vorbestimmten ersten Grenzwert verglichen werden,
**dadurch gekennzeichnet,**
**daß** von der Rechnereinrichtung (7), wenn der Summen-Differenzwert den ersten Grenzwert überschreitet, ein entsprechendes Warnsignal erzeugt und an die Entnahmeeinrichtungen (4) übertragen wird,
**daß** die Entnahme von Fluid an den Abgabepunkten (3) bei Empfang des Warnsignales automatisch unterbrochen wird, und
**daß** von der Rechnereinrichtung (7) beim Feststellen eines weiteren Anwachsens des Summen-Differenzwertes und Überschreiten eines zweiten Grenzwertes ein Sperren des Pipelinesystems (1) veranlaßt wird.

7. Überwachungsverfahren an einem Pipelinesystem gemäß Anspruch 6,
**dadurch gekennzeichnet,**
**daß** die zweiten Meßgrößen per Funk an die Rechnereinrichtung übertragen werden.

8. Überwachungsverfahren an einem Pipelinesystem gemäß Anspruch 6,
**dadurch gekennzeichnet,**
**daß** von der Rechnereinrichtung (7) bei Feststellen eines weiteren Anwachsens des Summen-Differenzwertes und Überschreiten eines zweiten höheren Grenzwertes ein Sperren des Pipelinesystems (1) und Umschalten auf ein paralleles Pipelinesystem veranlaßt wird.

9. Überwachungsverfahren an einem Pipelinesystem gemäß einem der Ansprüche 6 bis 8,
**dadurch gekennzeichnet,**
**daß** von der Rechnereinheit (7) beim Bilden des Summen-Differenzwertes durch zeitliche Verzögerungen im Pipelinesystem (1) und/oder durch Systemtoleranzen bedingte permanent auftretende Differenzwerte eliminiert werden.

10. Überwachungsverfahren an einem Pipelinesystem gemäß einem der Ansprüche 6 bis 9,
**dadurch gekennzeichnet,**
**daß** der von der Rechnereinheit (7) ermittelte Summen-Differenzwert temperaturkompensiert wird.

## Claims

1. Monitoring system within a pipeline system (1) with a feeding point (2) and one or more outlet points (3), comprising
a first measuring device (5) disposed at the feeding point (2), which registers a quantity of fluid or a quantity of fluid per unit of time fed into the pipeline system (1) and generates a corresponding first measured value,
removal devices (4), which remove fluid from the pipeline system, wherein a second measuring device (6) is disposed on each removal device (4), which registers a quantity of fluid or a quantity of fluid per unit of time removed from the pipeline system (1) and generates a corresponding second measured value, and
a computing unit (7), to which the first measured value and the second measured values are transferred, and which forms a difference value between the first measured value and the totalled second measured values, which totals several difference values over a given period and compares the resulting totalled difference values with a predetermined first threshold value,
**characterised in that**
whenever the totalled difference value exceeds the first threshold value, the computing unit (7) generates a corresponding warning signal and transfers this to the removal devices (4),
that, on receiving the warning signal, the removal devices (4) removing fluid from the pipeline system (1) automatically interrupt the removal, and that, on determining a further increase in the totalled difference value and an exceeding of a second threshold value, the computing unit (7) causes a blocking of the pipeline system (1).

2. Monitoring system in a pipeline system according to claim 1,
**characterised in that**
the removal devices (4) are mobile and can be connected to the outlet points (3), wherein a transfer device (12) for transferring the second measured value to the computing unit (7) by radio is provided on each removal device (4).

3. Monitoring system for a pipeline system according to claim 1,
**characterised in that**,
on determining a further increase in the totalled difference value and an exceeding of a second, higher threshold value, the computing unit (7) causes a blocking of the pipeline system (1) and a switchover to a parallel pipeline system.

4. Monitoring system in a pipeline system according to any one of the preceding claims,
**characterised in that,**
in forming the totalled difference value, the computing unit (7) eliminates permanently occurring difference values caused by time delays in the pipeline system (1) and/or by system tolerances.

5. Monitoring system in a pipeline system according to any one of the preceding claims,
**characterised by**
at least one temperature sensor (8) for compensating the temperature of the totalled difference values determined by the computing unit (7).

6. Monitoring method in a pipeline system with one feeding point (2) and one or more outlet points (3), comprising the following steps:
registration of a quantity of fluid or quantity of fluid per unit of time fed into the pipeline system (1) at the feeding point and generation of a corresponding first measured value,
removal of fluid from the pipeline system at the outlet points (3), wherein a quantity of fluid or a quantity of fluid per unit of time removed from the pipeline system (1) is registered at each outlet point (3), and a corresponding second measured value is generated, and
transfer of the first measured value and the second measured values to a computing unit (7), in which a difference value between the first measured value and the totalled, second measured values is formed, wherein several difference values are totalled over a given period, and the resulting totalled difference value is compared with a predetermined first threshold value,
**characterised in that**,
whenever the totalled difference value exceeds the first threshold value, a corresponding warning signal is generated by the computing unit (7) and transferred to the removal devices (4),
that the removal of fluid at the outlet points (3) is automatically interrupted, when the warning signal is received, and
that, on determining a further increase in the totalled difference value and an exceeding of a second threshold value, the computing unit (7) causes a blocking of the pipeline system (1).

7. Monitoring method in the pipeline system according to claim 6,
**characterised in that**
the second measured values are transferred to the computing unit by radio.

8. Monitoring method in a pipeline system according to claim 6,
**characterised in that**,
on determining a further increase in the totalled difference value and an exceeding of a second, higher threshold value, the computing unit (7) causes a blocking of the pipeline system (1) and a switchover to a parallel pipeline system.

9. Monitoring method in a pipeline system according to any one of claims 6 to 8,
**characterised in that**,
in forming the totalled difference value, the computing unit (7) eliminates permanently occurring difference values caused by time delays in the pipeline system (1) and/or by system tolerances.

10. Monitoring method in a pipeline system according to any one of claims 6 to 9,
**characterised in that**
the totalled difference value determined by the computing unit (7) is temperature compensated.

## Revendications

1. Système de surveillance d'un système de conduite (pipeline) (1) avec un point d'alimentation (2) et un ou plusieurs points de sortie (3), avec un premier dispositif de mesure (5) disposé sur le point d'alimentation (1) qui saisit une quantité de fluide alimenté dans le système de conduite (1) ou la quantité de fluide par unité de temps et produit une première valeur de mesure correspondante, des dispositifs de prélèvement (4) qui prélèvent le fluide du système de conduite, de telle sorte que sur chaque dispositif de prélèvement (4) est disposé un deuxième dispositif de mesure (6), qui saisit une quantité de fluide prélevée du système de conduite (1) ou la quantité de fluide par unité de temps et produit une seconde valeur de mesure correspondante, et
un dispositif de calcul (7) qui transmet la première valeur de mesure et les secondes valeurs de mesure qui forment une valeur de différence entre la première valeur de mesure et les secondes valeurs de mesure additionnées, plusieurs valeurs de différence sont additionnées sur une période de temps déterminée et la valeur de différence de sommes résultantes est comparée avec une première valeur limite prédéterminée,
**caractérisé en ce que** l'unité de calcul (7), lorsque la valeur de différence de sommes dépasse la première valeur limite, produit un signal d'alarme correspondant et le transmet au dispositif de prélèvement (4),
de sorte que le fluide en provenance du système de conduite (1) interrompt les installations de prélèvement (4) lors de la réception du signal d'alarme interrompant automatiquement le prélèvement, et
**en ce que** le dispositif de calcul (7), lors de la constatation d'une croissance supplémentaire de la valeur de différence de la somme et du dépassement d'une seconde valeur limite, provoque un blocage du système de conduite.

2. Système de surveillance d'un système de conduite selon la revendication 1,
**caractérisé en ce que** les dispositifs de prélèvement (4) sont raccordés de façon mobile avec le point de sortie (3), de sorte que sur chaque dispositif de prélèvement (4) est prévu un dispositif de transmission (12) pour la transmission de la seconde valeur de mesure par radio au dispositif de calcul (7).

3. Système de surveillance d'un système de pipeline selon la revendication 1,
**caractérisé en ce que** le dispositif de calcul (7), lors de la constatation d'une croissance ultérieure de la valeur de différence de la somme et du dépassement d'une seconde valeur limite supérieure, provoque un blocage du système de conduite (1) et la permutation sur un système de conduite parallèle.

4. Système de surveillance d'un système de conduite selon l'une des revendications précédentes,
**caractérisé en ce que** le dispositif de calcul (7), lors de la formation de la valeur de différence de la somme, est éliminé par retards temporels dans le système de conduite (1) et/ou par valeur de différence se produisant de façon permanente et conditionnée par des tolérances du système.

5. Système de surveillance d'un système de conduite selon l'une des revendications précédentes,
**caractérisé par** au moins un capteur de température (8) pour la compensation de température de la valeur de différence de sommes déterminées par l'unité de calcul (7).

6. Procédé de surveillance d'un système de conduite avec un point d'alimentation (2) et un ou plusieurs points de sortie (3) avec les étapes suivantes :
saisie d'une quantité de fluide alimenté dans le système de conduite (1) ou quantité de fluide par unité de temps sur le point d'alimentation et production d'une première valeur de mesure correspondante,
prélèvement du fluide à partir du système de conduite sur les points d'alimentation (3), moyennant quoi sur chaque point de sortie (3) il est saisi une quantité de fluide prélevée du système de conduite (1) ou une quantité de fluide par unité de temps et il est produit une seconde valeur de mesure correspondante, et
transmission de la première valeur de mesure et de la seconde valeur de mesure sur une unité de calculateur (7), dans laquelle une valeur de différence entre la première valeur de mesure et les secondes valeurs de mesure additionnées, plusieurs valeurs de différence sont additionnées sur une période de temps déterminée et la valeur de différence de sommes résultantes est comparée avec une première valeur limite prédéterminée,
**caractérisé en ce que**, par l'installation de calcul (7), lorsque la valeur de différence de sommes dépasse la première valeur limite, il est produit un signal d'alarme correspondant et celui-ci est transmis aux installations de prélèvement (4),
et **en ce que** le prélèvement de fluide aux points de sortie (3) à la réception du signal d'alarme est automatiquement interrompu, et **en ce qu'**à partir de l'installation de calcul (7), lors de la constatation d'une poursuite de croissance de la valeur de différence de sommes et du dépassement d'une seconde valeur de limite, un blocage du système de conduite (1) est provoqué.

7. Procédé de surveillance d'un système de conduite selon la revendication 6,
**caractérisé en ce que** les secondes valeurs de mesure sont transmises par radio au dispositif de calcul.

8. Procédé de surveillance d'un système de conduite selon la revendication 6,
**caractérisé en ce que**, à partir de l'installation de calcul (7), lors de la constatation d'une croissance ultérieure de la valeur de différence de sommes et du dépassement d'une seconde valeur limite supérieure, il est provoqué un blocage du système de conduite (1) et une permutation sur un système de conduite parallèle.

9. Procédé de surveillance d'un système de conduite selon l'une des revendications 6 à 8,
**caractérisé en ce que**, à partir de l'unité de calcul (7), lors de la formation de la valeur de différence de sommes par des retards temporels dans le système de conduite (1) et/ou par des valeurs de différence survenant de façon permanente et conditionnées par des tolérances de systèmes sont éliminées.

10. Procédé de surveillance d'un système de conduite selon l'une des revendications 6 à 9,
**caractérisé en ce que** la valeur de différence de sommes déterminée par l'unité de calcul (7) est compensée en température.
